# FASCICULE DE BREVET EUROPEEN

(11) **EP 2 175 620 B1**
(45) Date de publication et mention de la délivrance du brevet: **26.10.2011**
(21) Numéro de dépôt: 10152196.1
(22) Date de dépôt: 14.12.2004
(51) Int. Cl.: H04M 1/02, H04M 1/23

(54) **Terminal de communication comportant une face avant personnalisable**
Kommunikationsendgerät, das eine personalisierbare Frontseite besitzt
Communication terminal comprising a customisable front

(30) Priorité: 15.12.2003 FR 0314758
(43) Date de publication de la demande: 14.04.2010
(62) Demande divisionnaire de: 04300888.7
(73) Titulaire: IPG Electronics 504 Limited, St Peter Port Guernsey GY1 3QL (GB)
(72) Inventeur: Durand, Gilles, 95610, Eragny (FR); Barthelet, Philippe, 95610, Eragny (FR); Robin, Jean-Philippe, 75009, Paris (FR)
(74) Mandataire: Mansfield, Peter Turquand

(56) Documents cités:
- US-A1- 2001 024 945
- US-A1- 2003 078 014
- US-A1- 2003 211 835

## Description

La présente invention concerne un dispositif électronique avec un clavier personnalisable.

Des domaines d'application, non exclusifs, de l'invention sont les terminaux mobiles ou fixes de communication ou par exemple les consoles de jeux vidéo.

Un dispositif électronique de ce type comprend une interface homme-machine comprenant, entre autres, un clavier et un écran d'affichage.

Le clavier et l'écran d'affichage se trouvent généralement situés sur fa face avant du dispositif.

Le clavier et l'écran d'affichage sont connectés directement sur un circuit imprimé situé dessous.

De plus en plus d'utilisateurs de ce type de dispositifs, par exemple un terminal de communication, désirent personnaliser leur terminal.

Un des éléments clef de la personnalisation est le clavier. Il s'avère donc particulièrement intéressant de permettre à l'utilisateur de changer de clavier le plus facilement possible.

Le clavier d'un terminal est généralement solidaire de la face avant du terminal.

Ainsi, pour changer de clavier, l'utilisateur doit changer toute la face avant du terminal et mettre ainsi à nu le circuit imprimé avant de venir emboîter une autre face avant et personnaliser son terminal.

Ceci peut provoquer des dysfonctionnements liés à l'introduction de poussières sur le circuit imprimé.

De plus, la nappe de touche doit rester identique d'une face avant à une autre pour le même terminal.

En effet, si on met une face avant avec un clavier dont les touches ne sont pas disposées comme l'étaient les touches du clavier d'origine, alors il y aura une incompatibilité avec le circuit imprimé:
Le circuit imprimé, étant câblé pour recevoir des touches avec une disposition donnée, ne peut pas établir des connexions avec un clavier dont les touches auraient une autre disposition.

Le document WO 02 37907 propose un clavier d'ordinateur amovible. Le clavier comprend une prise de connexion intégrée regroupant toutes les connexions avec les touches composant le clavier. Lorsque l'utilisateur de l'ordinateur pose le clavier, par exemple avec des caractères latins, sur le corps de l'ordinateur, la prise de connexion intégrée du clavier se raccorde à une prise de connexion située sur le corps l'ordinateur. Ainsi, lorsque l'utilisateur saisit des informations sur le clavier, l'ordinateur prend en compte ces informations. Grâce à cette prise de connexion intégrée, l'utilisateur peut utiliser un autre clavier avec des caractères de type arabes.

Cependant, la fixation du clavier sur l'ordinateur est très peu sûre car elle consiste en un simple crochet et le clavier peut se déconnecter très facilement du corps de l'ordinateur.

La fixation du clavier ne permet pas d'utiliser l'ordinateur dans d'autres positions que posé sur un plan horizontal sans risquer la déconnexion du clavier.

Dans le cas de l'application à un dispositif électronique de petite taille, par exemple un terminal mobile, et devant pouvoir être utilisé dans diverses positions notamment dans un plan vertical ou avec le clavier en regard du sol, le manque de sûreté dans la fixation du clavier sur le corps du dispositif peut devenir critique.

Le document US 2003/0 211 835 décrit un téléphone mobile muni d'un clavier interchangeable.

L'invention a pour but de présenter une solution à ces problèmes et de réaliser un dispositif électronique avec un clavier personnalisable et dont la sûreté de la fixation est accrue.

L'invention, à cet effet, concerne un dispositif électronique comportant:
- Un boîtier comprenant une face avant et une face arrière, le boîtier renfermant un circuit imprimé;
- Un module clavier connecté électriquement au circuit imprimé, ledit module clavier étant amovible,
**caractérisé en ce qu'**il comprend en outre une épingle amovible qui enchâsse le module clavier sur son pourtour afin de verrouiller le module clavier sur ladite face avant.

Ainsi, d'une part, le clavier est verrouillé de façon sûre sur le dispositif électronique et ce dernier peut être utilisé dans n'importe quelle position, d'autre part, lorsque le clavier est détaché du dispositif électronique, le circuit imprimé du dispositif n'est pas mis à nu et ne risque pas d'être détérioré.

Dans un mode de réalisation de l'invention, le module clavier comprend une patte permettant la connexion électrique du module clavier sur le circuit imprimé du dispositif électronique disposant lui même d'un connecteur électrique.

Ainsi, différents claviers comprenant une disposition de touches différente peuvent être adaptés à un même dispositif.

Dans un autre mode de réalisation de l'invention le module clavier comporte un circuit imprimé spécifique, des touches, les touches étant connectées au circuit imprimé spécifique du module clavier.

L'invention concerne également un module clavier destiné à être adapté sur le dispositif électrique précédent, ledit module clavier comportant, entre autres, un circuit imprimé spécifique, des touches connectées au circuit imprimé spécifique une patte permettant la connexion électrique du module clavier sur le circuit imprimé et le maintien du module clavier sur la face avant du dispositif électronique.

D'autres carcactéristiques et avantages de l'invention appararaîtront à la lecture de la description suivante d'un mode de réalisation particulier de l'invention dans lequel le dispositif est un terminal de communication, donné à titre illustratif et pas limitatif, et des dessins énoncés ci-dessous.
La figure 1 illustre le terminal selon l'invention en coupe longitudinale selon l'axe médian du terminal.
La figure 2 illustre le terminal selon l'invention en vue éclatée.
La figure 3 illustre le coeur fonctionnel du terminal selon l'invention en vue éclatée.
La figure 4 illustre le module clavier du terminal selon l'invention en vue éclatée.
La figure 5 illustre le terminal selon l'invention avec un premier exemple de clavier.
La figure 6 illustre le terminal selon l'invention avec un deuxième exemple de clavier.

Dans la suite de la description, l'invention est décrite dans son application aux terminaux de communication.

Elle s'applique plus généralement à tous types de dispositifs électroniques possédant une interface homme-machine comprenant un clavier.

Un terminal de communication selon l'invention peut être un téléphone cellulaire de type GSM, DCS (Digital Communication System en anglais) ou UMTS (Universal Mobile Télécommunications System en anglais), ou les émetteurs-récepteurs radio, tels que, par exemple, un appareil de radiomessagerie, ou un assistant personnel numérique (personnal digital assistant ou PDA en anglais), ou encore un téléphone de type DECT (Digital European Cordless Telecommunications en anglais).

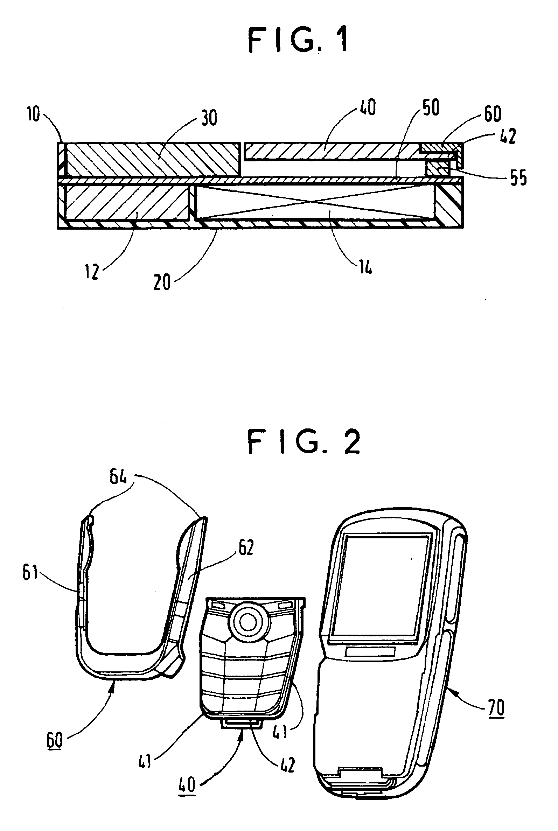

La figure 1 illustre le terminal selon l'invention en coupe longitudinale selon l'axe médian du terminal.

Le boitier du terminal est composé de deux faces: une face avant 10 et une face arrière 20.

Sous la face arrière 20, à l'intérieur du boitier, se trouvent principalement l'antenne 12 et la batterie 14.

Sous la face avant 10 se trouvent un module d'affichage 30 et un module clavier 40.

Ces différents éléments du terminal sont connectés sur un circuit imprimé 50.

Ce circuit imprimé 50 est sensiblement parallèle aux faces avant 10 et arrière 20 du boitier du terminal et s'étend sur toute la surface intérieure du terminal.

Le module d'affichage 30 est directement connecté sur le circuit imprimé 50.

Le module clavier 40 est connecté au circuit imprimé 50 via un connecteur 55 comprenant des points de connexions qui sont mis en correspondance avec des points de connexion situés sur le module clavier 40, lorsque l'utilisateur du terminal vient appliquer le module clavier 40 sur le terminal.

Les composants du module clavier 40 et ses fonctionnalités sont décrits avec précision dans ce qui suit.

Enfin une épingle 60, en vue éclatée sur la figure 2, présentant une forme sensiblement en U avec deux branches latérales 61 ot 62 et une base 63, vient enchâsser le module clavier 40 sur son pourtour afin de le verrouiller au terminal. Dans ce mode de réalisation, l'épingle amovible, avec ses trois côtés, vient donc enchâsser le module clavier sur trois côtés, ce qui permet une fixation très sûre du clavier.

Lorsque l'utilisateur du terminal désire enlever le module clavier 40, l'utilisateur déverrouille le module clavier 40 en levant au préalable l'épingle 60.

L'épingle 60, en forme sensiblement en U, peut par exemple comprendre des ergots 64 situés prés de l'extrémité libre de chaque branche 61 et 62 de l'épingle 60. Ces ergots permettent de fixer l'épingle 60 sur le terminal. Ces ergots 64 viennent se positionner dans des encoches prévues à cet effet sur le terminal.

Dans un autre mode de réalisation, l'épingle 60, en forme sensiblement en U, peut comprendre des branches 61 et 62 en un matériau plus élastique que celui de la base.

L'épingle 60, lorsqu'elle n'enchâsse pas le module clavier 40, comprend donc deux branches 61 et 62 convergentes situées dans un plan commun également à la base 63.

L'épingle 60 vient enchâsser en force le module clavier 40 sur son pourtour afin de le verrouiller au terminal par un écartement des deux branches 60 et 61.

L'épingle 60 pourrait être également de forme sensiblement rectangulaire évidée. Elle aurait alors trois côtés reprenant la forme en U précédemment décrite mais avec en plus un petit côté, sensiblement parallèle à la base 63, fixé au bout des branches 61 et 62. Dans ce mode de réalisation, l'épingle amovible vient donc enchâsser le module clavier sur tout son pourtour.

Ainsi, la fixation du clavier sur le terminal mobile est très sûre et permet d'utiliser le terminal dans diverses positions sans risquer la déconnexion du clavier.

Le terminal présente deux parties: d'une part, le module clavier 40 et l'épingle 60 et, d'autre part, un coeur fonctionnel 70.

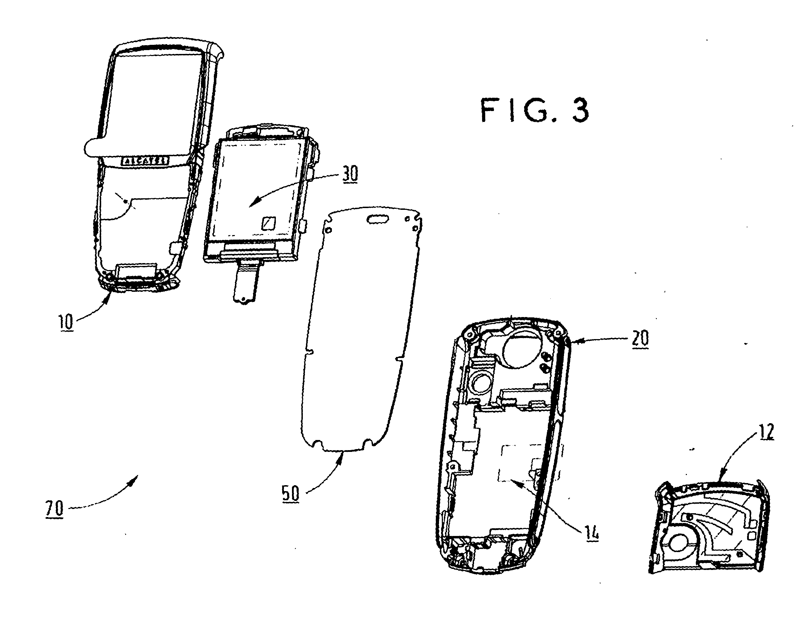

Le coeur fonctionnel 70 du terminal, en vue éclatée sur la figure 3, est composé, notamment, de la face avant 10 du boitier du terminal, sous laquelle se trouve le module d'affichage 30, le circuit imprimé 50, la batterie 14, l'antenne 12 et la face arrière 20 du boitier du terminal vient clore l'arrière du coeur fonctionnel 70.

Lorsque l'utilisateur veut fixer le module clavier 40 sur le terminal, il vient poser le module clavier 40 sur l'emplacement 71 du coeur fonctionnel 70 réservé pour le module clavier 40 puis vient glisser l'épingle 60 autour du module clavier 40.

L'épingle 60 vient s'appuyer sur un épaulement 4: pratiqué sur le pourtour du module clavier 40.

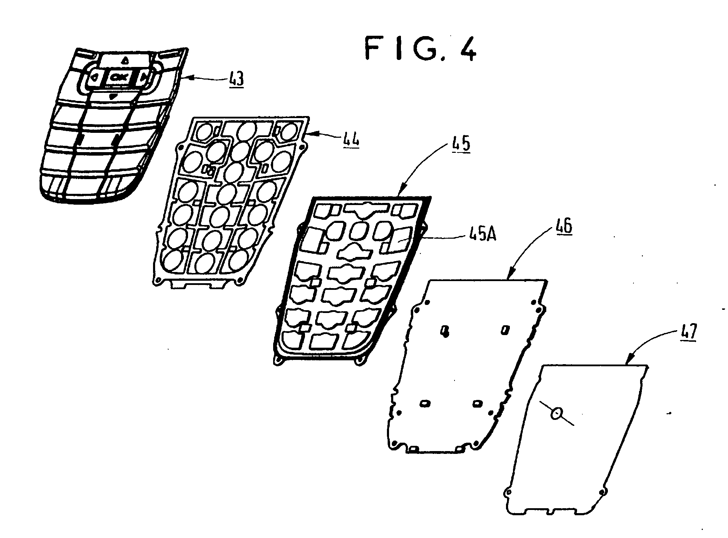

Le module clavier 40, dont une vue éclatée est présentée en figure 4, présente une forme sensiblement parallélipipédique comprenant sur l'un de ses petits côtés une patte 42.

La patte 42 pourrait également se trouver sur un des autres côté du module clavier 40, ou sur n'importe quel endroit de la surface arrière du module clavier 40, c'est à dire la face du module clavier 40 opposée à la face supportant les touches.

Cette patte 42 comprend des points de connexions électriques qui sont mis en correspondance avec des points de connexion électrique du connecteur 55 permettant la connexion électrique du module clavier 40 au circuit imprimé 50.

La connexion électrique entre le module clavier 40 et le circuit imprimé 50 du terminal est donc effectuée via la patte 42 et non sur toute la surface au clavier.

La connexion électrique entre le module clavier 40 et le circuit imprimé 50 du terminal pourrait, par exemple, aussi être effectuée sans l'aide du connecteur 55, directement sur de points de connexions situés sur le circuit imprimé 50.

La patte 42 est aussi un moyen de maintien du module clavier 40 sur la face avant 10.

Le module clavier 40 comprend également une couche de touches 43, éventuellement en plastique, une nappe élastomère 44, un film plastique 45 avec des coupelles métalliques 45a, un circuit imprimé spécifique 46 du clavier 40 avec des diodes électroluminescentes et une plaque isolante 47.

Les diodes électroluminescentes permettent le rétro-éclairage du module clavier 40 du terminal. Ces diodes électroluminescentes sont connectées électriquement sur le circuit imprimé spécifique 46 du clavier 40.

La couche de touches 43 via les coupelles métalliques 45a est connectée électriquement sur le circuit imprimé spécifique 46 du clavier 40.

Grâce à ce module clavier 40, comprenant un circuit imprimé spécifique 46, il n'y a pas de connexion électrique directe de chaque touche sur le circuit imprimé 50 du terminal:
Ceci permet donc la compatibilité de tous les modules clavier possibles avec le terminal de l'utilisateur.

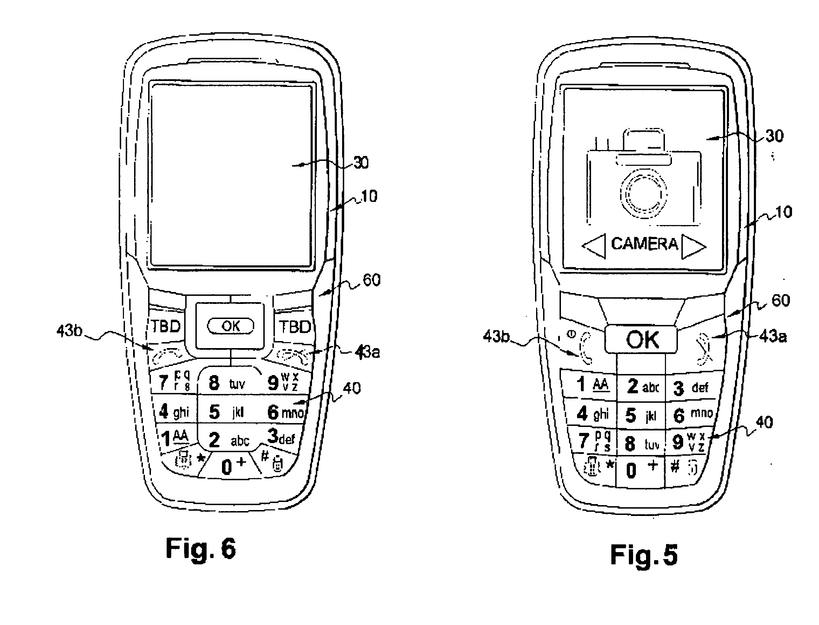

Les figures 5 et 6 présentent deux types de modules clavier 40 différents pouvant être connectés sur le même terminal.

Le module clavier 40 de la figure 5 présente 21 touches, celui de la figure 6 présente 23 touches, les touches 1, 2, et 3 ont été permutées avec les touches 7, 8, et 9 entre les deux modules clavier 40. Certaines touches ont des géométries différentes entre les deux modules clavier 40, par exemple les touches «raccrocher» et «décrocher» 43a et 43b.

Avec une connexion electrique directe de chaque touche sur le circuit imprimé 50 du terminal, il n'aurait pas été possible d'appliquer deux faces avant selon l'état de la technique comprenant des claviers aussi différents.

Certaines touches peuvent également être rétroéclairées d'une façon différente d'un module clavier 40 à un autre; dans ce cas, les diodes électroluminescentes du circuit imprimé spécifique 46 du clavier 40 ont une disposition différente entre les deux modules clavier 40.

Il est alors possible de disposer des diodes sous certaines touches et pas sous d'autres touches si ces dernières ne peuvent pas être rétroéclairées de part leur nature, par exemple, si elles sont galvanisées.

Dans l'art antérieur, les diodes sont disposées à demeure lors de la fabrication du terminal. Si on adapte un nouveau clavier possédant des touches galvanisées au lieu d'être transparentes alors les diodes sous-jacentes à ces touches galvanisées continuent à fonctionner et à consommer de l'énergie bien qu'elles ne servent à rien.

Grâce au module clavier 40 de l'invention, comprenant un circuit imprimé spécifique 46 avec des diodes électroluminescentes, seules les touches destinées à être rétroéclairées disposent de diodes électroluminescentes sous-jacentes, d'où une économie d'énergie. Et on assure toujours la compatibilité de tous les modules clavier de géométrie différente avec le terminal de l'utilisateur.

Les modes de réalisation précédents décrivent un terminal dont les faces avant 10 et arrière 20 s'étendent sensiblement parallélement l'une par rapport à l'autre dans un seul plan. Cependant, l'invention s'applique également à d'autre type de terminaux, comme par exemple, les terminaux dont les deux faces avant et arrière (10, 20) sont constituées de deux parties. Les deux parties de chaque face sont articulées autour d'une charnière commune aux deux faces permettant au terminal de se plier sur lui-même.

Par exemple, sous l'une des deux parties de la face 10 avant se trouve le module d'affichage 30 et sous l'autre partie de la face avant 10 se trouve le module clavier 40 selon l'invention.

Le terminal selon l'invention peut être personnalisé le plus possible en fin de la chaîne de fabrication, voire même par l'utilisateur lui-même lors de l'achat du terminal.

De plus, la connectique du terminal peut être testée sans le module clavier 40 puisque le connecteur 55 en permet l'accès.

Il peut être prévu de livrer le coeur fonctionnel 70 du terminal accompagné de différentes sortes de modules clavier 40 avec des couleurs différentes et différentes sortes d'épingles 60.

Enfin, les épingles peuvent servir à l'opérateur du réseau de radiocommunication de l'utilisateur pour personnaliser le terminal à son nom.

Les modes de réalisation suivants sont également considérés :
1. Dispositif électronique comportant:
   - Un boîtier comprenant une face avant (10) et une face arrière (20), le boîtier renfermant un circuit imprimé (50);
   - Un module clavier (40) connecté électriquement au circuit imprimé (50), ledit module clavier étant amovible,
   **caractérisé en ce qu'**il comprend en outre une épingle (60) amovible qui enchâsse le module clavier (40) sur son pourtour afin de verrouiller le module clavier sur ladite face avant (10).
2. Dispositif électronique selon le mode de réalisation 1, **caractérisé en ce que** ladite épingle (60) vient s'appuyer sur un épaulement (41) pratiqué sur le pourtour du module clavier (40).
3. Dispositif électronique selon le mode de réalisation 1, **caractérisé en ce que** l'épingle (60) a une forme sensiblement en U présentant une base (63) et deux branches latérales (61, 62), de sorte que le module clavier est enchâssé sur au moins trois côtés.
4. Dispositif électronique selon le mode de réalisation 3, **caractérisé en ce que** ladite épingle (60) comprend des ergots (64) situés prés de l'extrémité libre de chaque branche latérale (61, 62), destinés à se positionner dans des encoches prévues à cet effet sur le dispositif.
5. Dispositif électronique selon le mode de réalisation 3, **caractérisé en ce que** les deux branches latérales sont en matériau élastique, et en ce que l'épingle vient enchâsser le module clavier en force.
6. Dispositif électronique selon le mode de réalisation 1, **caractérisé en ce que** l'épingle (60) a une forme sensiblement rectangulaire évidée, de sorte que le module clavier est enchâssé sur tout son pourtour.
7. Dispositif électronique selon l'un quelconques des modes de réalisations précédents, **caractérisé en ce que** le module clavier (40) comprend une patte (42) permettant la connexion électrique du module clavier (40) sur le circuit imprimé (50) du dispositif électronique.
8. Dispositif électronique selon l'un quelconque des modes de realisations précédents, **caractérisé en ce que** le module clavier (40) comporte un circuit imprimé spécifique (46) et des touches (43) connectées au circuit imprimé spécifique (46) du module clavier.
9. Dispositif électronique selon des modes de réalisations 7 et 8, **caractérisé en ce qu'**il comprend un connecteur électrique (55) permettant la connexion électrique du module clavier (40) sur le circuit imprimé (50) du dispositif électronique en collaboration avec la patte (42).
10. Dispositif électronique selon l'un quelconque des modes de realisations 7 à 9, **caractérisé en ce que** la patte (42) a également une fonction de maintien du module clavier (40) sur la face avant (10) du dispositif électronique.
11. Dispositif électronique selon l'un quelconque des modes de realisations précédents, **caractérisé en ce qu'**il est un terminal mobile de radiocommunication.
12. Module clavier (40) destiné à être adapté sur un dispositif électrique selon l'un des modes de réalisations precédents, ledit module clavier (40) comportant, entre autres un circuit imprimé spécifique (46), des touches (43) connectées au circuit imprimé spécifique (46), une patte (42) permettant la connexion électrique du module clavier (40) sur le circuit imprimé (50) et le maintien du module clavier (40) sur la face avant (10) du dispositif électronique.

## Revendications

1. Téléphone mobile comprenant:
un boîtier ayant une face avant (10) et une face arrière (20), le boîtier renfermant un circuit imprimé (50);
un module clavier amovible (40) connecté électriquement au circuit imprimé (50);
le téléphone mobile étant **caractérisé en ce qu'**il comprend en outre une épingle amovible en forme de U (60) comprenant des moyens de fixation (64) pour fixer l'épingle (60) au boîtier du téléphone mobile, l'épingle amovible en forme de U (60) comprenant en outre une base (63) et deux branches latérales (61, 62) qui enchâssent le module clavier amovible (40) sur au moins trois côtés de son pourtour afin de verrouiller le module clavier (40) sur la face avant (10), les deux branches latérales (61, 62) étant réalisées en un matériau élastique qui est plus élastique qu'un matériau qui forme la base (63).

2. Téléphone mobile selon la revendication 1, dans lequel l'épingle amovible en forme de U (60) vient s'appuyer sur un épaulement pratiqué sur le pourtour du module clavier (40).

3. Téléphone mobile selon l'une des revendications 1 ou 2, dans lequel les moyens de fixation (64) pour fixer l'épingle amovible en forme de U (60) au boîtier du téléphone mobile incluent des ergots (64) situés près d'une extrémité libre de chaque branche latérale (61, 62), destinés à se positionner dans des encoches prévues à cet effet sur le téléphone mobile.

4. Téléphone mobile selon l'une quelconque des revendications précédentes, dans lequel le module clavier (40) inclut une patte (42) permettant la connexion électrique du module clavier (40) sur le circuit imprimé (50).

5. Téléphone mobile selon la revendication 4, comprenant en outre un connecteur électrique (55) permettant la connexion électrique du module clavier (40) sur le circuit imprimé (50) du téléphone mobile en collaboration avec la patte (42).

6. Téléphone mobile selon l'une des revendications 4 ou 5, dans lequel la patte (42) a également une fonction de maintien du module clavier (40) sur la face avant (10) du téléphone mobile.

7. Téléphone mobile selon l'une quelconque des revendications précédentes, dans lequel le module clavier (40) inclut un circuit imprimé spécifique (46) et des touches connectées au circuit imprimé spécifique (46).

## Claims

1. Mobile phone comprising:
a casing having a front face (10) and a rear face (20), the casing containing a printed circuit (50);
a removable keypad module (40) electrically connected to the printed circuit (50);
the movable phone being **characterized in that** it further comprises a U-shaped removable clip (60) comprising fastening means (64) to fasten the clip (60) to the casing of the mobile phone, the U-shaped removable clip (60) further comprising a base (63) and two lateral branches (61, 62) that enclose the removable keypad module (40) on at least three sides of its perimeter in order to lock the keypad module (40) to the front face (10), the two lateral branches (61, 62) being made from an elastic material that is more elastic than a material which forms the base (63).

2. Mobile phone according to claim 1, wherein the U-shaped removable clip (60) takes support on a shoulder made at the perimeter of the keypad module (40).

3. Mobile phone according to one of claims 1 or 2, wherein the fastening means (64) to fasten the U-shaped removable clip (60) to the casing of the mobile phone include lugs (64) located near a free end of each lateral branch (61, 62), adapted to be positioned in notches provided for this purpose on the mobile phone.

4. Mobile phone according to any of the previous claims, wherein the keypad module (40) includes a tab (42) for making the electrical connection from the keypad module (40) to the printed circuit (50).

5. Mobile phone according to claim 4, further comprising an electric connector (55) for making the electrical connection from the keypad module (40) to the printed circuit (50) of the mobile phone in conjunction with the tab (42).

6. Mobile phone according to one of claims 4 or 5, wherein the tab (42) also has the function of securing the keypad module (40) to the front face (10) of the mobile phone.

7. Mobile phone according to any of the previous claims, wherein the keypad module (40) includes a dedicated printed circuit (46) and keys connected to the dedicated printed circuit (46).

## Patentansprüche

1. Mobiltelefon, das Folgendes umfasst:
ein Gehäuse mit einer Vorderwand (10) und einer Rückwand (20), wobei das Gehäuse eine gedruckte Schaltung (50) umschließt;
ein abnehmbares Tastaturmodul (40), das an die gedruckte Schaltung (50) elektrisch angeschlossen ist;
wobei das Mobiltelefon **dadurch gekennzeichnet ist, dass** es außerdem ein abnehmbares U-förmiges Halterungselement (60) umfasst, das Befestigungsmittel (64) zum Befestigen des Halterungselements (60) am Gehäuse des Mobiltelefons aufweist, wobei das abnehmbare U-förmige Halterungselement (60) ferner eine Basis (63) und zwei Seitenteile (61, 62) aufweist, die das abnehmbare Tastaturmodul (40) an mindestens drei Seiten seines Umfangs fassen, um das Tastaturmodul (40) an der Vorderwand (10) zu verriegeln, wobei die beiden Seitenteile (61, 62) aus einem elastischen Werkstoff hergestellt sind, der elastischer als der Werkstoff ist, aus dem die Basis (63) gebildet ist.

2. Mobiltelefon nach Anspruch 1, bei dem das abnehmbare U-förmige Halterungselement (60) an einer Schulter zur Anlage kommt, die über dem Umfang des Tastaturmoduls (40) ausgebildet ist.

3. Mobiltelefon nach Anspruch 1 oder 2, bei dem die Befestigungsmittel (64) zum Befestigen des abnehmbaren U-förmigen Halterungselements (60) am Gehäuse des Mobiltelefons Nasen (64) aufweisen, die sich in der Nähe des freien Endes jedes Seitenteils (61, 62) befinden und dafür bestimmt sind, in Nuten zu gelangen, die zu diesem Zweck an dem Mobiltelefon vorgesehen sind.

4. Mobiltelefon nach einem der vorhergehenden Ansprüche, bei dem das Tastaturmodul (40) einen Ansatz (42) aufweist, der den elektrischen Anschluss des Tastaturmoduls (40) an die gedruckte Schaltung (50) ermöglicht.

5. Mobiltelefon nach Anspruch 4, das außerdem einen elektrischen Steckverbinder (55) umfasst, der im Zusammenwirken mit dem Ansatz (42) den elektrischen Anschluss des Tastaturmoduls (40) an die gedruckte Schaltung (50) des Mobiltelefons ermöglicht.

6. Mobiltelefon nach Anspruch 4 oder 5, bei dem der Ansatz (42) auch die Funktion des Haltens des Tastaturmoduls (40) an der Vorwand (10) des Mobiltelefons ausübt.

7. Mobiltelefon nach einem der vorhergehenden Ansprüche, bei dem das Tastaturmodul (40) eine spezifische gedruckte Schaltung (46) und an die spezifische gedruckte Schaltung (46) angeschlossene Tasten aufweist.
